# EUROPÄISCHE PATENTSCHRIFT

(11) **EP 2 200 865 B1**
(45) Veröffentlichungstag und Bekanntmachung des Hinweises auf die Patenterteilung: **22.04.2015**
(21) Anmeldenummer: 08785317.2
(22) Anmeldetag: 02.08.2008
(51) Int. Cl.: B60N 2/015, B60N 2/68, B60N 2/36, B60N 2/46, B60R 5/00

(54) **HINTERSITZ-LEHNE MIT EINEM MITTELARMLEHNENMODUL**
REAR SEAT BACK WITH A CENTRAL ARMREST MODULE
DOSSIER DE SIÈGE ARRIÈRE ÉQUIPÉ D'UN MODULE ACCOUDOIR CENTRAL

(30) Priorität: 13.09.2007 DE 102007043703
(43) Veröffentlichungstag der Anmeldung: 30.06.2010
(73) Patentinhaber: Volkswagen Aktiengesellschaft, 38440 Wolfsburg (DE)
(72) Erfinder: SCHULZ, Axel, 38524 Sassenburg (DE)
(86) Internationale Anmeldenummer: PCT/EP2008/006385
(87) Internationale Veröffentlichungsnummer: WO 2009/036841

(56) Entgegenhaltungen:
- EP-A- 0 713 800
- WO-A-97/28019
- DE-A1- 3 214 877
- DE-A1- 10 117 534
- DE-A1- 10 327 704
- DE-C1- 19 637 030
- GB-A- 2 293 317
- JP-A- 7 009 898
- JP-A- 57 118 934
- US-A- 1 835 049
- US-A- 2 305 871
- US-A1- 2006 091 705

## Beschreibung

Die Erfindung betrifft eine Hintersitz-Lehne, für eine Hintersitzanlage in einem Kraftfahrzeug, mit einem Mittellehnenmodul, das in der Hintersitz-Lehne anordbar ist.

Es ist bekannt, Hintersitzanlagen als Zulieferteile in Kraftfahrzeugen einzubauen. Die Hintersitzanlagen werden zumeist, um Anpassungsmöglichkeiten an das Kraftfahrzeug und den gewünschten Komfort der Nutzer zu haben, modular aufgebaut, so dass beispielsweise zu einem Hintersitz-Sitzteil verschiedenartig ausgeführte Hintersitz-Sitzlehnen komplettiert werden können.

Hintersitzanlagen, insbesondere deren Hintersitz-Lehnen, werden dabei auf verschiedene Art und Weise hergestellt.

Eine einfache Variante ist, Hintersitz-Lehnen zu verwenden, die sich zumeist in Fahrtrichtung gesehen unmittelbar vor einer Trennwand zwischen Gepäckraum und Fahrzeuginnenraum befinden. Diese sind oft als gepolsterte Sitzlehnen ausgebildet, wobei Schaumstoffe, Polstermaterialien, Drahtrahmen und gegebenenfalls Dämmstoffe zu einer Hintersitz-Lehne zusammengefügt werden. Die Hintersitz-Lehnen sind dabei beispielsweise aus dem Drahtrahmen, ein Grundgerüst bildend, ausgebildet, wobei der Drahtrahmen mit Schaum versehen wird, auf dem ein Bezug angeordnet ist. Der so gepolsterte Drahtrahmen als Hintersitz-Lehne wird mit der Karosserie des Kraftfahrzeugs verbunden und je nach Hersteller auf verschiedenste Art und Weise an der Karosserie befestigt.

Um insbesondere die Insassen auf den Rücksitzen oder auf den Rücksitzbänken solcher Fahrzeuge von den Auswirkungen von im Gepäckraum verrutschenden Gegenständen, besonders vor Verletzungen durch die bei einem Aufprall des Fahrzeugs nach vorne geschleuderten Gepäckstücke zu schützen, weisen die Fahrzeuge zumeist eine Ladegutschutzeinrichtung auf, die verhindern soll, dass bei einem Aufprall oder beim starken Bremsen nach vorne geschleuderte Gepäckstücke oder andere im Gepäckraum untergebrachte schwere Gegenstände die Hintersitz-Lehne der Rücksitze verformen oder gar durch die Hintersitz-Lehne in die Passagierzelle eindringen können.

Bei aufwändigeren Konstruktionen werden Lehnenrahmenkonstruktionen vorgesehen, die durch ihre verstärkte Ausführung auch im Bereich der Öffnung zwischen Gepäckraum und Fahrzeuginnenraum zumeist bereits einen gewissen Schutz gegen verrutschende Gegenstände aus dem Gepäckraum in den Innenraum bieten.

Eine solche Konstruktion ist beispielsweise aus der DE 10 2005 042 692 A1 bekannt. Sie beschreibt einen Fahrzeugsitz mit einer einen Lehnenrahmen ausbildenden Rückenlehnenstruktur, in dem ein Modul als eine klappbare Mittelarmlehne angeordnet ist, welches einen die Mittelarmlehne aufnehmenden Rahmen ausbildet, der in im Lehnenrahmen angeordnete erste Befestigungselemente einschiebbar und durch mindestens ein zweites Befestigungselement am Lehnenrahmen fixierbar ist.

Im Bereich der Hintersitz-Lehnen werden also zur Komforterhöhung für die Insassen zumeist Mittelarmlehnen eingeplant, wobei diese von vorn herein in die Sitzlehnenkonstruktion integriert oder integrierbar angeordnet sind.

In der DE 32 14 877 A1 wird eine Haltevorrichtung für eine schwenkbare Armlehne offenbart, die in einer Vorlehne integriert ist. Die Haltevorrichtung weist beidseitig Lagerachsen auf, die in Lageraugen aufgenommen werden. Jeweils im Bereich der Lagerachsen und der Lageraugen sind Sicherungsbügel vorgesehen, die einen das Lagerauge übergreifenden Bogenabschnitt aufweisen. Die Sicherungsbügel können entweder an der Armlehne oder am die Lageraugen tragenden Drahtrahmen beziehungsweise Träger gehalten werden.

Die Aufgabe dieser Erfindung besteht nun darin, ausgehend von den bekannten Lösungen aus dem Stand der Technik eine Hintersitz-Lehne für eine Hintersitzanlage zu schaffen, die möglichst einfach ausgebildet ist und in die walweise eine Mittelarmlehne integrierbar ist.

Die Erfindung wird durch eine Hintersitz-Lehne mit folgenden Merkmalen gelöst. Die Hintersitz-Lehne ist aus einem einteiligen, gepolsterten Drahtrahmen ausgebildet, der zwischen einem Fahrzeuginnenraum und einem Gepäckraum rohbauseitig befestigbar ist. Als Rohbau versteht der Anmelder die Karosserie beziehungsweise als rohbausseitige Befestigung sieht der Anmelder eine karosserieseitige Befestigung von untrennbar und trennbar mit der Karosserie verbundenen Teilen an. Somit ist eine rohbauseitige Anbindung der Hintersitz-Lehne direkt über untrennbar mit der Karosserie verbundene und/oder indirekt über trennbar mit der Karosserie verbundene Rohbauteile möglich.

In der Hintersitz-Lehne ist ein Mittelarmlehnenmodul anordbar, welches ebenfalls - so wie der Drahtrahmen - mindestens eine rohbauseitige Befestigung aufweist, wobei das Mittelarmlehnenmodul in einem Freiraum zwischen zwei gepolsterten Bereichen der Hintersitz-Lehne, den Drahtrahmen überspannend (erste Ausführungsalternative) oder nicht überspannend (zweite Ausführungsalternative) anordbar ist, wobei das Mittelarmlehnenmodul als Grundstruktur ein Trägerelement aufweist und über mindestens zwei Anbindungspunkte rohbauseitig befestigt ist, wobei der obere Anbindungspunkt indirekt am Rohbau an einem rohbauseitig befestigten Haltequerträger ausgebildet ist.

Die Hintersitz-Lehne ist in einer ersten Alternative der ersten Ausführungsvariante, wenn das Mittelarmlehnenmodul den Drahtrahmen überspannt, nicht mehr klappbar, da das Mittelarmlehnenmodul mittels seiner rohbauseitigen Befestigung vor dem Drahtrahmen der Hintersitz-Lehne liegt.

Die Hintersitz-Lehne ist in einer zweiten Alternative, wenn das Mittelarmlehnenmodul den Drahtrahmen nicht überspannt, klappbar, da das Mittelarmlehnenmodul nun nicht mehr vor dem Drahtrahmen der Hintersitz-Lehne liegt.

Die Hintersitz-Lehne ist dabei so ausgeführt, dass sie einteilig ist und zwar dadurch, dass beispielsweise mindestens ein Draht des Drahtrahmens den Freiraum zwischen den gepolsterten Bereichen überbrückt und somit diese beiden gepolsterten Bereiche, das linke und rechte Seitenteil der Hintersitz-Lehne miteinander verbindet.

Dadurch ist unabhängig davon, welches der beiden gepolsterten Bereich der Benutzer zum Klappen der Hintersitz-Lehne bedient, sicher gestellt, dass stets die gesamte - einteilige - Hintersitz-Lehne geklappt wird.

Der mindestens eine, die beiden gepolsterten Bereiche verbindende Draht, muss dabei so angeordnet sein, dass er, um ein Klappen der gesamten Hintersitz-Lehne zu gewährleisten, nicht hinter dem Mittelarmlehnenmodul angeordnet ist, da das Umklappen dann nicht mehr möglich wäre. Der Drahtrahmen in der Ausführung der zweiten Ausführungsalternative der ersten Ausführungsvariante weist somit eine Art Ausnehmung auf, die durch Weglassen der Drähte in diesem Bereich gebildet wird, so dass vor beziehungsweise in der Ausnehmung das Mittelarmlehnenmodul anordbar und rohbausseitig befestigbar ist. Die Ausnehmung wird vorzugsweise im oberen Bereich der Hintersitz-Lehne durch mindestens einen quer liegenden Draht, die beiden seitlichen Bereiche des Hintersitz-Lehne verbindend, begrenzt, wobei der quer liegende Draht beim Klappen der einteiligen Hintersitz-Lehne über den oberen Rand des rohbauseitig befestigten Mittelarmlehnenmoduls schwenkt.

Erfindungsgemäß weist das integrierbare Mittelarmlehnenmodul als Grundstruktur ein Trägerelement auf, welches ein oberes und ein unteres Polsterelement sowie eine Blende mit einer über der Blende liegenden, um eine zweite Klappachse schwenkbaren Mittelarmlehne trägt.

In bevorzugter Ausgestaltung der Erfindung sind die Polsterelemente an am Trägerelement angeordneten Drähten befestigt, indem am Bezug des Polsterelementes befestigte Klemmprofile in die Drähte eingreifen, mittels derer die mit dem Bezug versehenen aus einem Schaumteil gefertigten Polsterelemente am Trägerelement befestigt werden.

Ferner ist bevorzugt ein mittlerer Anbindungspunkt indirekt an einem rohbauseitig befestigten - beispielsweise zum Schutz vor aus dem Gepäckraum verrutschenden Gegenständen - angeordneten zweiten Haltequerträger ausbildbar.

Ein unterer Anbindungspunkt ist erfindungsgemäß wiederum direkt am Rohbau ausgebildet oder indirekt an einem rohbauseitig befestigten Halteelement ausbildbar. An diesen Anbindungspunkten sind vielfältige andere indirekte Befestigungsvarianten denkbar.

Bevorzugt und einfach zu realisieren ist beispielhaft folgende Lösung, bei der das als Blech hergestellte Trägerelement beispielsweise zungenartige Ausstellungen aufweist, die in gegenüberliegende korrespondierende Freimachungen des ersten, oberen und/oder zweiten, mittleren Haltequerträgers beziehungsweise des unteren Halteelementes eingreifen, so dass das Mittelarmlehnenmodul direkt in den Rohbau oder indirekt in die mit dem Rohbau verbundenen Haltequerträger einschiebbar oder einsteckbar ist. Eine Verbindung zu dem ein teiligen gepolsterten Drahtrahmen der Grundstruktur der Hintersitz-Lehne besteht dabei nicht.

Schließlich ist bevorzugt, dass das Trägerelement des Mittelarmlehnenmoduls an mindestens einem der Anbindungspunkte nicht nur eingeschoben oder eingesteckt, sondern zusätzlich verschweißt, verschraubt oder dergleichen ist, um die Aufnahme von auf die Mittelarmlehne wirkenden Kräften zu ermöglichen.

Die Erfindung wird nachfolgend anhand eines Ausführungsbeispieles mit zugehörigen Zeichnungen näher erläutert. Es zeigen:
Figur 1 einen Rohbau im Bereich einer Hintersitzanlage und
Figur 2 ein in einer Hiniersitzanlage integrierbares Mittelarmlehnenmodul.

Die Figuren 1 und 2 sollen die Ausführung einer Hintersitz-Lehne 10 für eine Hintersitzanlage 100, in der ein Mittelarmlehnenmodul 30 anordbar ist, verdeutlichten. Die Hintersitz-Lehne 10 ist dabei als Grundstruktur aus einem einteiligen oder nicht erfindungsgemäßen, mehrteiligen Drahtrahmen 10A ausgebildet, der entsprechend gepolstert und mit einem Bezug versehenen ist. Der einteilige oder nicht erfindungsgemäße, mehrteilige Drahtrahmen 10A ist hier beispielhaft zwischen einem Fahrzeuginnenraum und einem Gepäckraum rohbauseitig befestigt.

Die Erfindung ist in einem wesentlichen Aspekt dadurch gekennzeichnet, dass im Bereich der Hintersitz-Lehne 10 ein Mittelarmlehnenmodul 30 angeordnet ist, welches ebenfalls mindestens eine rohbauseitige Befestigung aufweist, aber dabei nicht mit dem einteiligen oder nicht erfindungsgemäßen, mehrteiligen Drahtrahmen 10A in direkter Verbindung steht.

Es existieren zwei Ausführungsvarianten, wobei die erste Ausführungsvariante in zwei Alternativen ausführbar ist. In der ersten Ausführungsvariante e ist der gepolsterte Drahtrahmen 10A, wie in Figur 1 gezeigt, einteilig ausgeführt ist, wobei das Mittelarmlehnenmodul 30 in einer ersten Ausführungsalternativen einem Freiraum zwischen zwei gepolsterten Bereich der Hintersitzlehne 10, den Drahtrahmen 10A überspannend und in einer zweiten Ausführungsalternative den Drahtrahmen 10A nicht überspannend, angeordnet ist.

In der ersten Ausführungsalternative ist die Hintersitz-Lehne 10 als Ganzes nicht auf ein Hintersitz-Sitzteil klappbar. Im Gegensatz dazu, ist die Hintersitz-Lehne 10 der zweiten Ausführungsalternative als Ganzes auf ein Hintersitz-Sitzteil klappbar.

Die zweite Ausführungsalternative der ersten Ausführungsvariante ist in den Figuren nicht näher dargestellt, jedoch im einleitenden Beschreibungsteil näher erläutert.

In einer zweiten, nicht erfindungsgemäßen, ebenfalls nicht gezeigten, Ausführungsvariante ist der gepolsterte Drahtrahmen 10A der Hintersitz-Lehne 10 zweiteilig ausgeführt, wobei das Mittelarmlehnenmodul 30 ebenfalls in einem Freiraum jetzt zwischen zwei gepolsterten Bereichen des Drahtrahmens 10A, der Hintersitzlehne 10 anordbar ist. In diesem Fall überspannt das Mittelarmlehnenmodul 30 den Drahtrahmen 10A nicht, wodurch in der zweiten Ausführungsvariante alternativ das jeweilige linke und/oder rechte Hintersitz-Lehnenteil (nicht dargestellt) um eine erste Klappachse y₁ schwenkbar an einem Rohbau 40 angeordnet ist. Die erste Klappachse y₁ verläuft quer zur Fahrrichtung x, wobei auch ein Hintersitz-Sitzteil 20 aus einem solchen ein- oder mehrteiligen Drahtrahmen 10A herstellbar ist und ebenfalls über eine ebenfalls nicht weiter dargestellte quer zur Fahrrichtung x verlaufende Klappachse schwenkbar angeordnet sein kann.

Der gepolsterte oder die beiden gepolsterten Bereiche der Hintersitz-Lehne 10, die auf dem Drahtrahmen 10A befestigt sind, sind in Figur 1 nicht näher dargestellt. Je nach Aufteilung, können beispielsweise die gepolsterten Seitenbereiche jeweils ein Drittel der Gesamtbreite der Hintersitz-Lehne 10 oder auch beispielsweise jeweils 2/5 der Gesamtbreite der Hintersitz-Lehne 10 betragen.

Bei dem in Figur 2 gezeigten beispielhaft dargestellten Mittelarmlehnenmodul 30 handelt sich im Vergleich zu Figur 1, die Größenverhältnisse Hintersitz-Lehne 10 betreffend, um ein Mittelarmlehnenmodul 30, welches 1/5 der Gesamtbreite der Hintersitz-Lehne 10 aufweist.

Das Mittelarmlehnenmodul 30 weist als Grundstruktur ein Trägerelement 30D auf, welches in Figur 2 nicht sichtbar ist. Dieses Trägerelement 30D ist beispielsweise ein das gezeigte Mittelarmlehnenmodul 30 zum Gepäckraum hin begrenzendes Trägerblech. Das Mittelarmlehnenmodul 30 weist ein oberes und ein unteres Polsterelement 30E sowie eine Blende 30B auf, wobei die in x-Richtung gesehene vordere Fläche der Blende 30B erst dann sichtbar wird, wenn die eigentliche Mittelarmlehne 30A, die bevorzugt ebenfalls gepolstert sein kann, um eine zweite Klappachse y₂ in Fahrtrichtung zugeschwenkt worden ist.

Bevorzugt sind die Polsterelemente 30E an am Trägerelement 30D angeordneten Drähten befestigt, wobei - ähnlich wie bei den gepolsterten Bereichen der Hintersitz-Lehne 10 - am Bezug des jeweiligen Polsterelementes 30E befestigte Klemmprofile in die am Trägerelement 30D angeordneten Drähte eingreifen. Somit sind die aus einem Schaumteil vorgefertigten und mit einem Bezug versehenden Polsterelementen 30E am Trägerelement 30D befestigbar.

Grundsätzlich benötigt das Mittelarmlehnenmodul 30 zur Befestigung mindestens einen Anbindungspunkt an dem Rohbau 40. Jedoch ist eine Anbindung an zwei Anbindungspunkten sicherer, wobei für die Befestigung des Mittelarmlehnenmoduls 30 folgende beispielhafte Befestigungsvarianten am Rohbau 40 vorgeschlagen werden.

Ein oberer möglicher Anbindungspunkt wird beispielsweise direkt am Rohbau 40 ausgebildet. Dieser obere Anbindungspunkt kann aber beispielsweise auch indirekt an einem ersten rohbauseitig befestigten Haltequerträger 50 ausgebildet werden, der zumeist am oberen Bereich zur Halterung von Kopfstützen vorgesehen ist. Dieser erste rohbauseitige Haltequerträger 50 verläuft somit zwischen dem zu befestigenden Drahtrahmen 10A und dem Rohbau 40.

Ein mittlerer Anbindungspunkt kann an einem zweiten Haltequerträger 60 ausgebildet werden, der ebenfalls mit dem Rohbau 40 indirekt verbunden ist und quer zur Fahrtrichtung zwischen Gepäckraum und Innenraum des Kraftfahrzeuges eingezogen wird, und der zusätzlich dazu dient, den Innenraum vor aus dem Gepäckraum in Richtung des Innenraums verrutschende Gegenstände zu schützen.

Ein unterer Anbindungspunkt ist beispielsweise im unteren Bereich direkt am Rohbau im Übergangsbereich zwischen Hintersitz-Sitzteil 20 und Hintersitz-Lehne 10 ausbildbar. Hier ist vorzugsweise zusätzlich ein Haltelement 70 anordbar, so dass eine indirekte rohbauseitige Anbindung ausgebildet ist, um eine spezielle Befestigung des Mittelarmlehnenmoduls 30 zu erreichen..

Beispielsweise wird also eine Befestigung eines Mittelarmlehnenmoduls 30 in folgenden Ausführungsmöglichkeiten realisiert. Es erfolgt eine Anbindung des Mittelarmlehnenmoduls 30 am oberen, mittleren Anbindungspunkt oder am mittleren und unteren Anbindungspunkt oder eben am oberen und unteren Anbindungspunkt.

Selbstverständlich kann das Mittelarmlehnenmodul 30 wie in dem weiteren Ausführungsbeispiel dargestellt und beschrieben auch an drei Anbindungspunkten befestigt werden. Die an drei Anbindungspunkten vorgenommene Befestigung erfolgt in bevorzugter Ausgestaltung wie folgt, nämlich dass das Trägerelement 30D des Mittelarmlehnenmoduls 30 zungenartige Ausstellungen aufweist, die in Freimachungen 50A, 60A des ersten und zweiten Haltequerträgers 50, 60 beziehungsweise im Haltelement 70 eingreifen, so dass das Mittelarmlehnenmodul 30 insgesamt indirekt - über die Haltequerträger 50, 60 und das Halteelement 70 - mit dem Rohbau 40 verbunden ist. Dabei wird das Mittelarmlehnenmodul 30 im oberen beziehungsweise im mittleren Anbindungspunkt eingeschoben beziehungsweise eingesteckt und im unteren Anbindungspunkt im speziell dafür vorgesehenen Halteelement vorzugsweise verschraubt, verschweißt oder dergleichen.

Andere Befestigungsmöglichkeiten sind selbstverständlich denkbar, so ist zum Beispiel im mittleren Anbindungspunkt am Trägerelement 30D des Mittelarmlehnenmoduls 30 eine Art U-Halter 30C befestigbar, wobei die offenen, zum Gepäckraum gerichteten, u-förmigen stegartigen Elemente in montierter Stellung des Mittelarmlehnenmoduls 30 in den zweiten Haltequerträger 60A in dort vorgehaltene korrespondierende, hülsenartige Aufnahmen eingreifen. Somit ist das Mittelarmlehnenmodul 30 im mittleren Bereich im zweiten Haltequerträger 60 gesteckt und beispielweise im oberen Anbindungspunkt ebenfalls eingesteckt und im unteren Anbindungspunkt verschraubt, verschweißt oder dergleichen.

Die beschriebene Erfindung hat den Vorteil, dass für einfache Lösungen eine sehr leichte und preiswert herzustellende Hintersitzanlage 100 ohne Mittelarmlehenmodul 30 eingesetzt werden kann.

Folgende Hintersitz-Lehnen zur Ausstattung der Hintersitzanlage 100 sind vorzuhalten.

Erstens Hintersitz-Lehne 10 einteilig (erste Ausführungsvariante in der ersten Ausführungsalternative) mit einem im Wesentlichen den gesamten Bereich des Hintersitz-Lehne 10 bildenden Drahtrahmen 10A - wie in Figur 1 dargestellt - als Grundgerüst für die Bepolsterung mit dem in der Bepolsterung vorgesehenen Freiraum zur Anordnung des Mittelarmlehnenmoduls 30 oder mit vollständiger Bepolsterung ohne Freiraum 60A bei einer Ausstattung der Hintersitz-Lehne 10 ohne Mittelarmlehnenmodul 30.

Zweitens Hintersitz-Lehne 10 einteilig (erste Ausführungsvariante in der zweiten Ausführungsalternative) mit einem nur einen Teil des gesamten Bereiches des Hintersitz-Lehne 10 bildenden Drahtrahmen 10A unter Ausbildung einer Ausnehmung (nicht dargestellt) zur Anordnung des Mittelarmlehnenmoduls 30 vor oder in der Ausnehmung im Freiraum zwischen den seitlich angeordneten und gepolsterten Hintersitz-Lehnenteilen 10.

Drittens Hintersitz-Lehne 10 zweiteilig (zweite nicht erfindungsgemäßen Ausführungsvariante) mit einem in zwei Teilen vorgehaltenen Drahtrahmen 10A zur Ausbildung eines linken und rechten Drahtrahmens 10A als Grundgerüst für die Bepolsterung zur Anordnung des Mittelarmlehnenmoduls 30 in dem Freiraum zwischen den beiden seitlich angeordneten und gepolsterten Hintersitz-Lehnenteilen 10

Ist ein Mittelarmlehnenmodul 30 gewünscht, so wird - bezüglich der ersten Ausführungsvariante beide Ausführungsalternativen betreffend - einfach ein mittlerer Bereich nicht gepolstert beziehungsweise in der zweiten nicht erfindungsgemäßen, Ausführungsvariante die zweiteilige Ausführung der Hintersitz-Lehne 10 vorgehalten, und in dem jeweils dazwischen liegenden Freiraum wird in einfacher Weise eine Mittelarmlehne 30 rohbauseitig befestigt.

An der Hintersitz-Lehne 10 müssen zur Integration des Mittelarmlehnenmoduls 30 keine konstruktiven Verkehrungen getroffen werden.

Im Ergebnis steht eine preiswerte und variable Hintersitzanlage 100 mit in der Hintersitzlehne 10 integrierbarem Mittelarmlehnenmodul 30 zur Verfügung.

### Bezugszeichenliste

- 100: Hintersitzanlage
- 10: Hintersitz-Lehne
- 10A: Drahtrahmen
- 20: Hintersitz-Sitzteil
- 20A: Drahtrahmen
- 30: Mittelarmlehnenmodul
- 30A: Mittelarmlehne (gepolstert)
- 30B: Blende
- 30C: Halter (U-Bügel)
- 30D: Trägerelement (Blech)
- 30E: Mittelarmlehnen-Polsterelemente

- 40: Rohbau/Karosserie
- 50: erster Haltequerträger (Kopfstützen)
- 50A: Freimachung
- 60: zweite Haltequerträger (Gepäckraumsicherung)
- 60A: Freimachung
- 70: Haltelement
- 70A: Schraubverbindung

- y₁: erste Klappachse-Hintersitzlehne
- y₂: zweite Klappachse-Mittelarmlehne

## Patentansprüche

1. Hintersitz-Lehne (10); für eine Hintersitzanlage (100) in einem Kraftfahrzeug, mit einem Mittelarmlehnenmodul (30), das in der Hintersitz-Lehne (10) anordbar ist, wobei die Hintersitz-Lehne (10) aus einem einteiligen, gepolsterten Drahtrahmen (10A) ausgebildet ist, der zwischen einem Fahrzeuginnenraum und einem Gepäckraum rohbauseitig befestigbar ist, wobei das Mittelarmlehnenmodul (30) in einem Freiraum zwischen zwei gepolsterten Bereichen der Hintersitz-Lehne (10), den Drahtrahmen (10A) überspannend oder nicht überspannend, anordbar ist,
wobei das Mittelarmlehnenmodul (30) als Grundstruktur ein Trägerelement (30D) aufweist und über mindestens zwei Anbindungspunkte rohbauseitig befestigt ist, wobei ein oberer Anbindungspunkt indirekt am Rohbau an einem rohbauseitig befestigten Haltequerträger ausgebildet ist.

2. Hintersitz-Lehne nach Anspruch 1,
**dadurch gekennzeichnet, dass**
die Hintersitz-Lehne (10) in einteiliger Ausführung vorliegt, bei der das Mittelarmlehnenmodul (30) den Drahtrahmen (10A) nicht überspannt, so dass die einteilige Hintersitz-Lehne (10) über eine erste Klappachse (y1) auf ein Hintersitz-Sitzteil (20) schwenkbar ist/sind.

3. Hintersitz-Lehne nach Anspruch 1,
**dadurch gekennzeichnet, dass**
das Trägerelement (30D) des Mittelarmlehnenmoduls (30) ein oberes und ein unteres Polsterelement (30E) sowie eine Blende (30B) mit einer über der Blende (30B) liegenden, um eine zweite Klappachse (y2) schwenkbaren Mittelarmlehne (30A) trägt.

4. Hintersitz-Lehne nach Anspruch 1,
**dadurch gekennzeichnet, dass**
die Polsterelemente (30E) an am Trägerelement (30D) angeordneten Drähten befestigt sind, indem am Bezug des Polsterelementes (30) befestigte Klemmprofile in die Drähte eingreifen, mittels denen die aus einem Schaumteil mit einem Bezug versehenen, vorgefertigten Polsterelemente (30E) am Trägerelement (30D) befestigbar sind.

5. Hintersitz-Lehne nach Anspruch 1,
**dadurch gekennzeichnet, dass**
ein mittlerer Anbindungspunkt an einem rohbauseitig befestigten - zum Schutz vor aus dem Gepäckraum verrutschenden Gegenständen - angeordneten zweiten Haltequerträger (60) ausbildbar ist.

6. Hintersitz-Lehne nach Anspruch 1,
**dadurch gekennzeichnet, dass**
ein unterer Anbindungspunkt direkt am Robbau/Karosserie (40) oder einem rohbauseitig ausgebildeten beziehungsweise am Rohbau/Karosserie (40) befestigten Halteelement (70) ausbildbar ist.

7. Hintersitz-Lehne nach einem der Ansprüche 5 oder 6,
**dadurch gekennzeichnet, dass**
das Trägerelement (30D) mindestens eine Ausstellung aufweist, die in mindestens eine im Rohbau (40) direkt ausgebildete Freimachung (50A, 60A) und/oder in mindestens ein direkt im Rohbau ausgebildetes Halteelement (70) eingreift, oder das Trägerelement (30D) indirekt mit dem Rohbau verbunden ist, indem es mittels der mindestens einen Ausstellung in den mindestens einen ersten und/oder zweiten Haltequerträger (50, 60) und/oder das mindestens eine mit dem Rohbau (40) verbundene Halteelement (70) eingreift, so dass das Mittelarmlehnenmodul (30) direkt oder indirekt am Rohbau/Karosserie (40) einschiebbar oder einsteckbar ist.

8. Hintersitz-Lehne nach einem der Ansprüche 5, 6 oder 7,
**dadurch gekennzeichnet, dass**
das Trägerelement (30D) des Mittelarmlehnenmoduls (30) an mindestens einem der Anbindungspunkte nicht nur eingeschoben oder eingesteckt, sondern zusätzlich verschweißt, verschraubt oder dergleichen ist.

## Claims

1. Rear seat back (10) for a rear seat system (100) in a motor vehicle, with a central armrest module (30) which is arrangeable in the rear seat back (10), wherein the rear seat back (10) is formed from a single-part upholstered wire frame (10A) which is fastenable to the bodyshell between a vehicle interior and a luggage compartment, wherein the central armrest module (30) is arrangeable in a free space between two upholstered regions of the rear seat back (10) in a manner spanning or not spanning the wire frame (10A), wherein the central armrest module (30) has, as a basic structure, a support element (30D) and is fastened to the bodyshell via at least two connecting points, wherein an upper connecting point is formed indirectly on the bodyshell on a holding crossmember fastened to the bodyshell.

2. Rear seat back according to Claim 1, **characterized in that** the rear seat back (10) is present in a single-part embodiment, in which the central armrest module (30) does not span the wire frame (10A), and therefore the single-part rear seat back (10) can be pivoted onto a rear seat seat part (20) via a first folding axis (y1).

3. Rear seat back according to Claim 1, **characterized in that** the support element (30D) of the central armrest module (30) bears an upper and a lower padded element (30E) and a panel (30B) with a central armrest (30A) which lies above the panel (30B) and is pivotable about a second folding axis (y2).

4. Rear seat back according to Claim 1, **characterized in that** the padded elements (30E) are fastened to wires arranged on the support element (30D) by clamping profiles which are fastened to the cover of the padded element (30) engaging in the wires, by means of which the padded elements (30E), which are premanufactured from a foam part and are provided with a cover, are fastenable to the support element (30D).

5. Rear seat back according to Claim 1, **characterized in that** a central connecting point is formable on a second holding crossmember (60) which is fastened to the bodyshell and is arranged for protection against objects sliding out of the luggage compartment.

6. Rear seat back according to Claim 1, **characterized in that** a lower connecting point is formable directly on the bodyshell/bodywork (40) or on a holding element (70) which is formed on the bodyshell or is fastened to the bodyshell/bodywork (40).

7. Rear seat back according to either of Claims 5 and 6, **characterized in that** the support element (30D) has at least one deployment means which engages in at least one clearance (50A, 60A) formed directly in the bodyshell (40) and/or in at least one holding element (70) formed directly in the bodyshell, or the support element (30D) is indirectly connected to the bodyshell by engaging by means of the at least one deployment means in the at least one first and/or second holding crossmember (50, 60) and/or the at least one holding element (70), which is connected to the bodyshell (40), and therefore the central armrest module (30) is insertable or pluggable directly or -indirectly onto the bodyshell/bodywork (40).

8. Rear seat back according to one of Claims 5, 6 or 7, **characterized in that** the support element (30D) of the central armrest module (30) is not only inserted or plugged onto at least one of the connecting points, but is additionally welded, screwed or the like thereon.

## Revendications

1. Dossier de siège arrière (10) pour une unité de siège arrière (100) dans un véhicule automobile, comprenant un module accoudoir central (30) qui peut être disposé dans le dossier de siège arrière (10), le dossier de siège arrière. (10) étant réalisé à partir d'un cadre en fil métallique (10A) rembourré d'un seul tenant qui peut être fixé côté coque entre un habitacle de véhicule et un compartiment à bagages, le module accoudoir central (30) pouvant être disposé dans un espace libre entre deux régions rembourrées du dossier de siège arrière (10), en recouvrant ou non le cadre en fil métallique (10A),
le module accoudoir central (30) comprenant un élément de support (30D) en tant que structure de base et étant fixé côté coque par le biais d'au moins deux points de raccordement, un point de raccordement supérieur étant réalisé indirectement sur la coque sur une traverse de retenue fixée côté coque.

2. Dossier de siège arrière selon la revendication 1,
**caractérisé en ce que**
le dossier de siège arrière (10) est présent sous forme de construction d'un seul tenant dans laquelle le module accoudoir central (30) ne recouvre pas le cadre en fil métallique (10A), de telle sorte que le dossier de siège arrière (10) d'un seul tenant puisse être pivoté sur une partie d'assise de siège arrière (20) autour d'un premier axe de rabattement (y1).

3. Dossier de siège arrière selon la revendication 1,
**caractérisé en ce que**
l'élément de support (30D) du module accoudoir central (30) porte un élément de rembourrage supérieur et un élément de rembourrage inférieur (30E) ainsi qu'un cache (30B) avec un accoudoir central (30A) situé sur le cache (30B) et pouvant pivoter autour d'un deuxième axe de rabattement (y2).

4. Dossier de siège arrière selon la revendication 1,
**caractérisé en ce que**
les éléments de rembourrage (30E) sont fixés à des fils métalliques disposés sur l'élément de support (30D), par le fait que des profilés de serrage fixés au revêtement de l'élément de rembourrage (30) viennent en prise dans les fils métalliques, au moyen desquels les éléments de rembourrage (30E) préfabriqués à partir d'une partie en mousse et pourvus d'un revêtement peuvent être fixés à l'élément de support (30D).

5. Dossier de siège arrière selon la revendication 1,
**caractérisé en ce**
**qu'**un point de raccordement central peut être réalisé sur une deuxième traverse de retenue (60) fixée côté coque et disposée en vue de la protection contre des objets glissant hors du compartiment à bagages.

6. Dossier de siège arrière selon la revendication 1,
**caractérisé en ce**
**qu'**un point de raccordement inférieur peut être réalisé directement sur la coque/carrosserie (40) ou sur un élément de retenue (70) réalisé côté coque ou fixé à la coque/carrosserie (40).

7. Dossier de siège arrière selon l'une quelconque des revendications 5 et 6,
**caractérisé en ce que**
l'élément de support (30D) comprend au moins une partie saillante qui vient en prise dans au moins un dégagement (50A, 60A) réalisé directement dans la coque (40) et/ou dans au moins un élément de retenue (70) réalisé directement dans la coque, ou l'élément de support (30D) est relié indirectement à la coque, par le fait qu'il vient en prise, au moyen de l'au moins une partie saillante, dans l'au moins une première et/ou deuxième traverse de retenue (50, 60) et/ou l'au moins un élément de retenue (70) relié à la coque (40), de telle sorte que le module accoudoir central (30) puisse être inséré ou enfiché directement ou indirectement sur la coque/carrosserie (40).

8. Dossier de siège arrière selon l'une quelconque des revendications 5, 6 ou 7,
**caractérisé en ce que**
l'élément de support (30D) du module accoudoir central (30) est, en au moins l'un des points de raccordement, non seulement inséré ou enfiché, mais en outre soudé, vissé ou similaire.
